# EUROPÄISCHE PATENTSCHRIFT

(11) **EP 3 559 796 B1**
(45) Veröffentlichungstag und Bekanntmachung des Hinweises auf die Patenterteilung: **07.06.2023**
(21) Anmeldenummer: 18700455.1
(22) Anmeldetag: 04.01.2018
(51) Int. Cl.: G06F 3/06, G06F 9/455, G06F 11/14

(54) **VERFAHREN ZUM ERSTELLEN EINER DATENSICHERUNG EINER VIRTUALISIERTEN AUTOMATISIERUNGSLÖSUNG, COMPUTERPROGRAMM MIT EINER IMPLEMENTATION DES VERFAHRENS UND NACH DEM VERFAHREN ARBEITENDER VIRTUALISIERUNGSSERVER**
METHOD FOR CREATING A DATA BACKUP OF A VIRTUALIZATION AUTOMATION SOLUTION, COMPUTER PROGRAM WITH AN IMPLEMENTATION OF THE METHOD AND VIRTUALIZATION SERVER OPERATING ACCORDING TO THE PROCESS
PROCÉDÉ DE RÉALISATION D'UNE SAUVEGARDE DE DONNÉES D'UNE SOLUTION D'AUTOMATISATION VIRTUELLE, PROGRAMME INFORMATIQUE COMPRENANT UNE MISE EN UVRE DUDIT PROCÉDÉ ET SERVEUR DE VIRTUALISATION FONCTIONNANT SELON LEDIT PROCÉDÉ

(30) Priorität: 25.01.2017 EP 17153054
(43) Veröffentlichungstag der Anmeldung: 30.10.2019
(73) Patentinhaber: Siemens Aktiengesellschaft, 80333 München (DE)
(72) Erfinder: SCHÜTZ, Andreas, 76185 Karlsruhe (DE)
(74) Vertreter: Siemens Patent Attorneys
(86) Internationale Anmeldenummer: PCT/EP2018/050165
(87) Internationale Veröffentlichungsnummer: WO 2018/137902

(56) Entgegenhaltungen:
- US-B1- 8 850 146
- "Symantec NetBackup (TM) for VMware Administrator's Guide - Release 7.5", , 12. Januar 2012 (2012-01-12), XP055141810, Gefunden im Internet: URL:http://kbdownload.symantec.com/resourc es/sites/BUSINESS/content/live/DOCUMENTATI ON/5000/DOC5162/en_US/NetBackup7.5_AdminGu ide_VMware.pdf?__gda__=1411393770_c2402ef7 9d42f0c9f8c7a29f0e476017 [gefunden am 2014-09-22]

## Beschreibung

Die Erfindung betrifft ein Verfahren zum Erstellen einer Datensicherung einer virtualisierten Automatisierungslösung. Eine Automatisierungslösung bezieht sich dabei jeweils auf einen zu automatisierenden technischen Prozess und als Automatisierungslösung werden dabei das oder jedes für diesen Prozess bestimmte Steuerungsprogramm sowie die davon be- oder verarbeiteten Daten bezeichnet. Bei dem technischen Prozess handelt es sich zum Beispiel um einen Fertigungsprozess oder einen Chargenprozess. Bei einer Virtualisierung einer solchen Automatisierungslösung läuft das oder jedes Steuerungsprogramm auf einer virtualisierten Hardware ab, nämlich einem sogenannten Virtualisierungsserver.

Eine Virtualisierung einer Automatisierungslösung hat verschiedene Vorteile. Nicht zuletzt gehört dazu, dass im Falle einer Störung, insbesondere einer Störung in der Hardware des Virtualisierungsservers, die Automatisierungslösung zur Fortsetzung der Steuerung und/oder Überwachung des jeweiligen technischen Prozesses auf einen anderen Virtualisierungsserver übertragen werden kann.

Gebräuchliche Virtualisierungssoftware bietet oftmals nur unzureichende Datensicherungsmöglichkeiten.

Beispielsweise zeigt die Patentschrift US 8850146 B1 verschiedene Ausführungsformen zur Sicherung einer virtuellen Maschine. Die virtuelle Maschine, die auf einem ersten Datenträger abläuft, kann dabei einen Hypervisor umgehen, um schneller auf ein pass-through volume zuzugreifen. Dadurch wird ein Backup der virtuellen Maschine aber erschwert, da Daten nun sowohl auf einem virtual disk image als auch auf einem pass-through volume liegen können.

Wenn eine Sicherung einer virtuellen Maschine zurückgespielt werden soll, ist zunächst eine Neuinstallation des Hypervisors erforderlich, woraufhin in einem anschließenden Schritt dessen Konfiguration zurückgespielt werden kann. Treiber, Skripte oder andere Software-Pakete, die eventuell nachträglich in den Hypervisor installiert wurden, sind von der Sicherung der Konfiguration des Hypervisors nicht erfasst und müssen mit entsprechendem Zeitaufwand manuell nachinstalliert werden.

Alternativ kann der Virtualisierungsserver auch heruntergefahren werden und das Speichermedium, auf dem der Hypervisor installiert ist, auf herkömmliche Art und Weise gesichert werden. Dies kann allerdings einen Anlagenstillstand zur Folge haben und ist mit erheblichem Zeitaufwand verbunden.

Eine Aufgabe der vorliegenden Erfindung besteht darin, ein Verfahren anzugeben, mittels dessen auf einfache Art und Weise alle zum Betrieb einer Automatisierungslösung auf einem Virtualisierungsserver notwendigen Daten erfasst und gesichert werden können.

Diese Aufgabe wird mittels eines Verfahrens zum Erstellen einer Datensicherung einer virtualisierten Automatisierungslösung mit den Merkmalen des Anspruchs 1 gelöst. Dazu ist bei einem Verfahren zum Erstellen einer Datensicherung einer auf einem Virtualisierungsserver ablaufenden virtualisierten Automatisierungslösung Folgendes vorgesehen: Auf dem Virtualisierungsserver wird aufgrund eines Aufrufs von einem entfernten Computer ein Computerprogramm ausgeführt, unter dessen Kontrolle das Erstellen der Datensicherung erfolgt. Das Computerprogramm umfasst eine Definition der Daten und/oder Dateien, die von der Datensicherung erfasst werden sollen. Dafür umfasst das Computerprogramm zumindest eine Programmcodeanweisung mit einer Spezifikation der in die Datensicherung einzuschließenden Daten. Im Rahmen der Ausführung des Computerprogramms durch den Virtualisierungsserver wird die Datensicherung schließlich erstellt.

Das durch den Virtualisierungsserver ausführbare Computerprogramm, zum Beispiel ein Skript, eine Anweisungsliste oder dergleichen, veranlasst bei Ausführung durch den Virtualisierungsserver eine Sicherung all derjenigen Daten und Dateien, die in dem Computerprogramm als für die Datensicherung der virtualisierten Automatisierungslösung notwendig spezifiziert sind. Die Sicherung erfolgt bevorzugt, aber nicht notwendig, auf eine vom Virtualisierungsserver verschiedene Hardware, die im Folgenden zur Unterscheidung als Datensicherungsserver bezeichnet wird. Die Übertragung der Datensicherung vom Virtualisierungsserver zum Datensicherungsserver erfolgt über eine leitungslose oder leitungsgebundene kommunikative Verbindung zwischen dem Virtualisierungsserver und dem Datensicherungsserver, insbesondere über eine Ethernet-Verbindung, bevorzugt abgesichert durch das HTTPS-Protokoll.

Der Vorteil der hier vorgeschlagenen Lösung besteht darin, dass eine Datensicherung einer virtualisierten Automatisierungslösung möglich ist, welche durch Rücksichern der Datensicherung reibungslos auf einen anderen Virtualisierungsserver übertragen werden und dort mit minimalem Zeitverlust wieder in Betrieb gehen kann.

Bei einer bevorzugten Ausführungsform des Verfahrens wird der auf dem Virtualisierungsserver ausgeführte Hypervisor durch einen entsprechenden Aufruf veranlasst, seine Konfigurationsdaten auf das Bootmedium des Hypervisors zurückzuschreiben. Der Aufruf kann dabei bspw. zur Laufzeit des Virtualisierungsservers bzw. des Hypervisors erfolgen. Dieser spezielle Aufruf des Hypervisors ist Teil des zum Erstellen der Datensicherung bestimmten Computerprogramms. Der Hypervisor läuft üblicherweise komplett im RAM des Virtualisierungsservers ab und Konfigurationsänderungen werden nur gespeichert, wenn die Konfigurationsdatei oder die Konfigurationsdateien des Hypervisors auf dem Bootmedium des Hypervisors gespeichert wird bzw. werden. Dies erfolgt üblicherweise automatisch und in regelmäßigen Abständen, zum Beispiel jede Stunde. Eine Datensicherung, die unmittelbar nach einer solchen automatischen Sicherung der Konfiguration abläuft, erfasst bis zur nächsten automatischen Sicherung erfolgende Konfigurationsänderungen nicht. Der spezielle Aufruf des Hypervisors bewirkt durch seine Position in dem Computerprogramm, dass die Konfigurationsdaten vor Erstellen der Datensicherung zurückgeschrieben werden. Damit ist sichergestellt, dass beim Erstellen der Datensicherung stets die aktuelle Konfiguration des Hypervisors gesichert wird, wenn der Speicherort der Konfigurationsdateien von der Datensicherung erfasst ist. Das bedeutet, dass bspw. im Fall einer regelmäßigen, insbesondere periodischen, Sicherung der Konfiguration des Hypervisors ein Aufruf zur Sicherung der Konfiguration des Hypervisors erfolgt, bspw. zu einem Zeitpunkt zwischen zwei regelmäßigen Sicherungen. Die Sicherung kann dabei die eigentliche Konfiguration des Hypervisors enthalten als auch bevorzugt nachträglich, d.h. nach der Installation des Hypervisors, installierte ein oder mehrere Software-Pakete, wie bspw. einen oder mehrere Treiber und/oder Skripte.

Bei einer besonderen Ausführungsform des Verfahrens erfolgt der Aufruf des Computerprogramms zum Erstellen der Datensicherung über einen Webbrowser auf dem aufrufenden Computer, zum Beispiel in Form eines Aufrufs wie https:\\<IP-Adresse des Virtualisierungsserversc\backup.html.

Dann kann das Anlegen der Datensicherung besonders einfach und unkompliziert und auch von einem entfernten Ort ausgelöst werden. Besondere Detailkenntnisse sind auf Seiten des Bedieners, der auf diese Weise das Anlegen der Datensicherung veranlasst, nicht erforderlich und entsprechend kann das Verfahren auch durch ungeschultes Personal durchgeführt werden, zum Beispiel zu bestimmten Zeitpunkten oder in regelmäßigen Abständen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Datensicherungsverfahrens nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Das hier vorgeschlagene Verfahren zum Erstellen einer Datensicherung ist zur automatischen Ausführung in Form eines Computerprogramms realisiert. Das Computerprogramm ist zur Ausführung durch ein Computersystem bestimmt. Das ausführende Computersystem ist dabei der Virtualisierungsserver. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden.

Das Computerprogramm ist eine Implementierung des gegenständlichen Verfahrens zum Erstellen einer Datensicherung in Software. Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von den Begriffen Software und Computerprogramm auch andere Implementationsmöglichkeiten, nämlich insbesondere eine Implementation in Firmware oder in Firm- und Software oder in Firm- und Hardware, umfasst sind.

Die Erfindung ist damit einerseits auch ein Computerprogramm mit durch einen Computer ausführbaren Programmcodeanweisungen zum Erstellen einer Datensicherung einer virtualisierten Automatisierungslösung und andererseits ein Speichermedium mit einem derartigen Computerprogramm, also ein Computerprogrammprodukt mit Programmcodemitteln, sowie schließlich auch ein Computersystem, hier der Virtualisierungsserver, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, wie in der in den angehängten Ansprüchen dargelegten Erfindung beschrieben.

Es zeigen
- FIG 1: einen Virtualisierungsserver mit einer darauf ablaufenden zu sichernden Automatisierungslösung sowie einen Datensicherungsserver und
- FIG 2: ein zur Sicherung der auf dem Virtualisierungsserver ablaufenden Automatisierungslösung bestimmtes Computerprogramm.

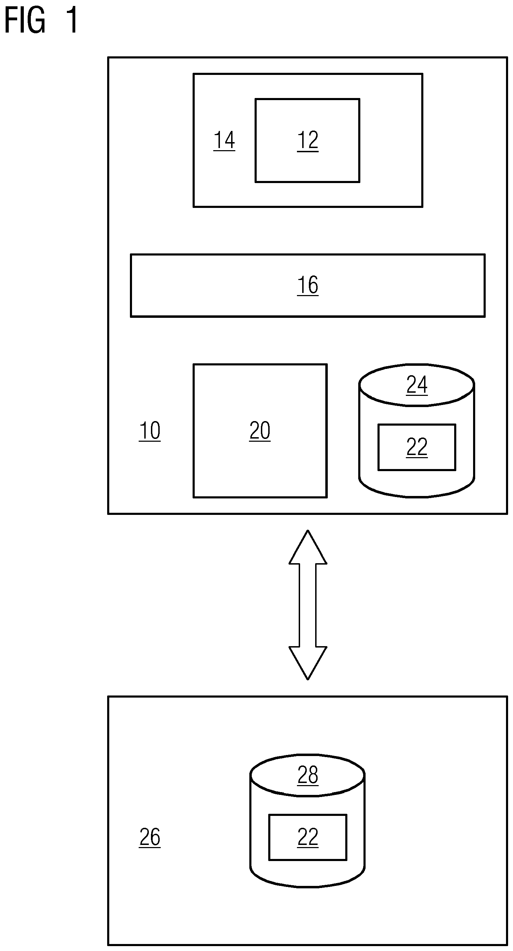

Die Darstellung in FIG 1 zeigt in schematisch stark vereinfachter Weise einen grundsätzlich an sich bekannten Virtualisierungsserver 10. Auf diesem läuft eine Automatisierungslösung 12 ab. Im Rahmen der Ausführung der Automatisierungslösung 12 durch den Virtualisierungsserver 10 erfolgt in ebenfalls grundsätzlich an sich bekannter Art und Weise eine Steuerung und/oder Überwachung eines selbst nicht dargestellten technischen Prozesses. Die Ausführung der Automatisierungslösung 12 erfolgt mittels einer oder mehrerer virtueller Maschinen 14. Mittels weiterer virtueller Maschinen 14 können auf demselben Virtualisierungsserver 10 weitere Automatisierungslösungen 12 ausgeführt werden. In der Darstellung in FIG 1 ist mit Rücksicht auf einfache Verhältnisse nur eine einzelne virtuelle Maschine 14 dargestellt. Ein sogenannter Hypervisor 16 fungiert als Schnittstelle zwischen der virtuellen Maschine 14 oder einer Mehrzahl virtueller Maschinen 14 und der (nicht gezeigten) Hardware des Virtualisierungsservers 10.

Zur Datensicherung einer virtualisierten Automatisierungslösung 12 gemäß dem hier vorgeschlagenen Ansatz ist ein durch den Virtualisierungsserver 10 ausführbares Computerprogramm 20 vorgesehen. Das Computerprogramm 20 wird von einem mit dem Virtualisierungsserver 10 kommunikativ, zum Beispiel über das Internet, verbundenen entfernten Computer 26 aus aufgerufen. Bei dem Computerprogramm 20 handelt es sich zum Beispiel um ein Skript, eine Anweisungsliste oder dergleichen. Das Computerprogramm 20 veranlasst bei einer Ausführung durch den Virtualisierungsserver 10 eine Sicherung aller in dem Computerprogramm 20 spezifizierten Daten und Dateien und das Ergebnis ist eine Datensicherung 22 der virtualisierten Automatisierungslösung 12. Die Datensicherung 22 wird zunächst in einem lokalen Massenspeicher 24 des Virtualisierungsservers 10 oder einem für den Virtualisierungsserver 10 erreichbaren Massenspeicher zwischengespeichert. Nach Abschluss der Sicherung wird die Datensicherung 22 zu dem Computer 26 übertragen, der das Computerprogramm 20 zur Erzeugung der Datensicherung 22 aufgerufen hat. Dieser aufrufende Computer 26 fungiert damit als Speicherort der Datensicherung 22 und wird entsprechend auch als Datensicherungsserver 26 bezeichnet. Dort wird die Datensicherung 22 in einem lokalen Massenspeicher 28 des Datensicherungsservers 26 oder einem für den Datensicherungsserver 26 erreichbaren Massenspeicher gespeichert. Der Virtualisierungsserver 10 und der Datensicherungsserver 26 sind auch für diese Datenübertragung vom Virtualisierungsserver 10 zum Datensicherungsserver 26 in grundsätzlich an sich bekannter Art und Weise kommunikativ miteinander verbunden und auch für diese Datenübertragung wird zum Beispiel eine über das Internet gegebene Verbindung genutzt. Die Übertragung der Daten der Datensicherung 22 zum Datensicherungsserver 26 erfolgt bevorzugt in abgesicherter Form, zum Beispiel nach dem HTTPS-Protokoll.

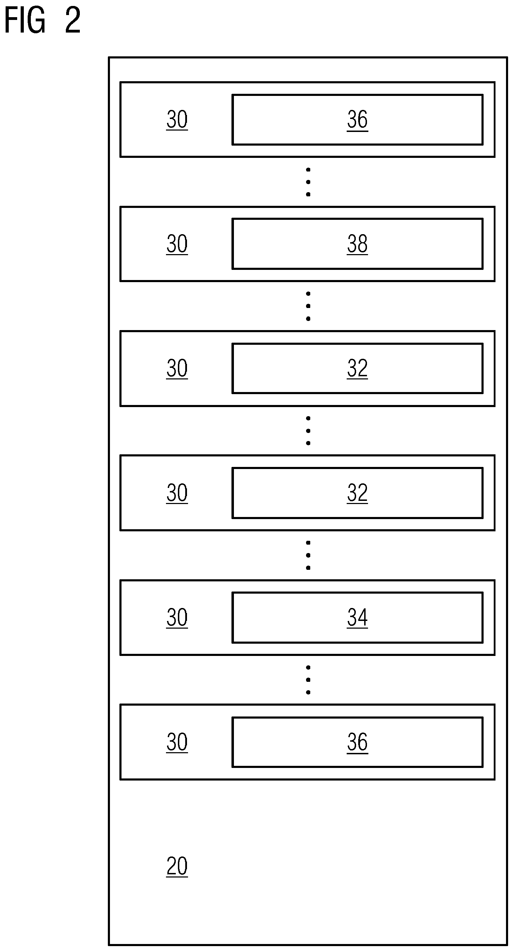

Die Darstellung in FIG 2 zeigt - ebenfalls in schematisch stark vereinfachter Art und Weise - das zur Erzeugung der Datensicherung 22 durch den Virtualisierungsserver 10 ausgeführte Computerprogramm 20 mit einzelnen weiteren Details. Das Computerprogramm 20 umfasst in an sich bekannter Art und Weise als Programmcodemittel Programmcodeanweisungen 30. Dazu gehören zum Beispiel ein oder mehrere Programmcodeanweisungen 30 mit einer Spezifikation 32 der für die Sicherung der virtualisierten Automatisierungslösung 12 relevanten Daten und/oder Dateien. Die oder jede Programmcodeanweisungen 30 mit einer solchen Spezifikation 32 ist ein Beispiel für eine Festlegung der für die Sicherung der virtualisierten Automatisierungslösung 12 notwendigen Daten/Dateien. Jede Programmcodeanweisung 30 mit einer solchen Spezifikation 32 bewirkt eine Sicherung der oder jeder durch die Spezifikation 32 benannten Datei und/oder Daten. Alternativ bewirkt jede derartige Programmcodeanweisung 30, dass die durch zumindest eine später ausgeführte Programmcodeanweisung 30 aufgerufene Datensicherung 22 die jeweiligen Daten/umfasst. Im Rahmen einer solchen Spezifikation 32 wird der Hypervisor 16 bevorzugt veranlasst, vor der Erstellung der Datensicherung 22 die Konfigurationsdatei oder die Konfigurationsdateien des Hypervisors 16 auf das Bootmedium des Hypervisors 16 zurückzuschreiben. Zu den von zumindest einer Spezifikation 32 umfassten Daten gehört auch das Bootmedium des Hypervisors 16, so dass das Bootmedium bei der Sicherung berücksichtigt wird und damit sichergestellt ist, dass die zurückgeschriebenen Konfigurationsdaten des Hypervisors 16 von der Datensicherung 22 erfasst sind.

Nach Ausführung aller Programmcodeanweisungen 30 mit einer solchen Spezifikation 32 und/oder Ausführung der oder jeder die zumindest eine Spezifikation verarbeitenden Programmcodeanweisung 30 liegt die Datensicherung 22 vor und kann zum Datensicherungsserver 26 übertragen werden. Dies erfolgt mittels zumindest einer Programmcodeanweisung 30, welche das Datenübertragungsziel 34 spezifiziert, zum Beispiel in Form der Adresse des Datensicherungsservers 26.

Optional kann das Computerprogramm 20 Programmcodeanweisungen 30 zur grundsätzlich an sich bekannten Belegung eines Semaphors 36 oder dergleichen beim Beginn der Programmausführung und zur Freigabe des Semaphors 36 zum Ende der Programmausführung umfassen. Auf diese oder ähnliche Weise lässt sich sicherstellen, dass das Computerprogramm 20 nicht gleichzeitig mehrfach ausgeführt wird.

Weiter optional kann das Computerprogramm 20 Programmcodeanweisungen 30 zur Authentifizierung 38 eines Benutzers umfassen, so dass die Datensicherung 22 nur dann erstellt und im Rahmen des Computerprogramms 20 nur dann auf den Datensicherungsserver 26 heruntergeladen wird, wenn der das Computerprogramm 20 aufrufende Bediener sich zum Beispiel durch Eingabe eines Benutzernamens und eines Kennworts als zur Erstellung der Datensicherung 22 autorisiert ausweist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung wie in den angehängten Ansprüchen definiert, zu verlassen.

Kurz zusammengefasst ermöglicht die hier vorgeschlagene Neuerung eine Datensicherung 22 einer auf einem Virtualisierungsserver 10 ablaufenden virtualisierten Automatisierungslösung 12, wobei auf dem Virtualisierungsserver 10 aufgrund eines Aufrufs von einem entfernten Computer 26 ein Computerprogramm 20 mit zumindest einer Programmcodeanweisung 30 mit einer Spezifikation 32 der in die Datensicherung 22 einzuschließenden Daten und Dateien ausgeführt wird und die Datensicherung 22 im Rahmen der Ausführung des Computerprogramms 20 erstellt wird.

Im Falle eines Ausfalles, bspw. durch einen Software- oder Hardwarefehler, kann der Virtualisierungsserver bzw. ein Ersatz-Virtualisierungsserver somit schnell wieder in Betrieb genommen werden. Dann liegt eine aktuellere Datensicherung vor, als wenn bspw. nur entsprechend der regelmäßigen, insbesondere periodischen, eine Sicherung vorgenommen wird. Möchte man die Datensicherung zurückspielen, muss man zunächst den Hypervisor neuinstallieren und anschließend die gesicherte Konfiguration des Hypervisors zurückspielen. Treiber, Skripte oder andere Software-Pakete, die eventuell nachträglich in den Hypervisor installiert wurden, waren nicht Bestandteil der Konfigurationssicherung und mussten bisher manuell nachinstalliert werden. Mittels der vorgeschlagenen Datensicherung (die sowohl die eigentlich Konfiguration des Hypervisors als auch eines oder mehrerer Softwarepakete, wie bspw. einen oder mehrere Treiber und/oder Skripte) kann nun die Installation des Hypervisors als auch die Konfiguration des Hypervisors und auch die Installation nachträglich in den Hypervisor installierter Software-Pakete einfach vorgenommen werden.

Alternativ kann man den Virtualisierungsserver auch herunterfahren und das Speichermedium, auf dem der Hypervisor installiert ist, über klassische Wege sichern (Boot-CD, Ausbauen des Speichermediums, ...). Dies hat allerdings einen Anlagenstillstand zur Folge und ist mit erheblichem zeitlichem Aufwand verbunden.

Auf dem Hypervisor bzw. dem Virtualisierungsserver wird entweder manuell oder während einer automatisierten Installation, bspw. mittels eines sog. Kickstart Scripts, ein Script installiert. Dieses installierte Script ermöglicht es, während des laufenden Betriebes -also zur Laufzeit- ein Backup des Hypervisor zu erstellen und bspw. über eine Netzwerkverbindung via HTTPS vom Hypervisor-Server zu laden. Dabei wird unter Umständen kein administrativer Zugriff auf den Server via SSH oder ähnlichem benötigt. Um ein Backup zu erstellen kann bspw. von einem Drittrechner mit Netzwerkzugriff über einen Browser eine Adresse aufgerufen werden. Der Aufruf ist durch Benutzername und Passwort gesichert. Nach erfolgreicher Authentifizierung kann der Virtualisierungsserver zunächst alle noch nicht auf das Speichermedium geschriebenen Konfigurationsänderungen sichern und/oder eine Komplettsicherung des Hypervisor-Boot-Mediums, bspw. via Disk Dump, erstellen. Nach Abschluss der Sicherung kann automatisch ein Download der Sicherungskopie auf den aufrufenden Rechner erfolgen. Es wird durch das (auf dem Hypervisor installierte) Script sichergestellt, dass nur ein Backup (d.h. eine Datensicherung) parallel erstellt werden kann, um den störungsfreien Betrieb des Virtualisierungsservers zu gewährleisten.

Im Falle eines Serverausfalles, kann das so gewonnene Backup auf eine SD-Karte bzw. einen USB-Stick zurückgespielt werden, um den ausgefallen Server, bzw. einen Ersatzserver wieder in Betrieb zu nehmen.

Durch die Vermeidung eines Anlagenstillstands, kann unabhängig vom Wartungszyklus der Anlage und somit auch deutlich häufiger ein Backup erstellt werden, was im Falle eines Serverausfalles mehr Sicherheit bietet. Außerdem kann das Backup mit deutlich weniger Zeitaufwand zurückgespielt werden. Man benötigt also sowohl weniger Zeit, als auch weniger Fachkenntnisse.

Das Erstellen des Backups erfolgt, bspw. via Webzugriff, im laufenden Betrieb, bspw. ohne administrativen Zugriff auf den Server. Das Backup wird vom Server auf einen PC via HTTPS-Download transferiert. Gleichzeitig wird sichergestellt, dass der Serverbetrieb nicht gestört wird, indem der Betrieb der virtuellen Maschine(n) und somit der Anlage höher priorisiert wird.

Durch administrativen Zugriff auf den Server, bspw. via SSH, könnte man ebenfalls ein Backup im laufenden Betrieb erstellen. Via SCP konnte das so erstellte Backup auf einen anderen Rechner übertragen werden. Jedoch könnte dabei unbeabsichtigt, z.B. durch einen Tippfehler, ein Ausfall des Servers herbeigeführt werden.

## Patentansprüche

1. Verfahren zum Erstellen einer Datensicherung (22) einer auf einem Virtualisierungsserver (10) ablaufenden virtualisierten Automatisierungslösung (12),
wobei auf dem Virtualisierungsserver (10) aufgrund eines Aufrufs von einem entfernten Computer (26) ein Computerprogramm (20) mit zumindest einer Programmcodeanweisung (30) mit einer Spezifikation (32) der in die Datensicherung (22) einzuschließenden Daten und Dateien ausgeführt wird und
die Datensicherung (22) im Rahmen der Ausführung des Computerprogramms (20) erstellt wird,
wobei auf dem Virtualisierungsserver (10) ein Hypervisor (16) ausgeführt wird und wobei das Computerprogramm (20) Programmcodeanweisungen (30) umfasst, **dadurch gekennzeichnet, dass** die Programmcodeanweisungen den Hypervisor (16) veranlassen, vor dem Erstellen der Datensicherung (22) dessen Konfigurationsdateien auf ein von der Datensicherung (22) erfasstes Bootmedium des Hypervisors (16) zu schreiben.

2. Verfahren nach Anspruch 1, wobei die Spezifikation (32) der in die Datensicherung einzuschließenden Daten die Konfiguration des Hypervisors enthält als auch bevorzugt nachträglich, d.h. nach der Installation des Hypervisors, installierte ein oder mehrere Software-Pakete, wie bspw. einen oder mehrere Treiber und/oder Skripte.

3. Verfahren nach Anspruch 1 oder 2, wobei das Computerprogramm (20) Programmcodeanweisungen (30) mit Mitteln (36) zum Sperren gegen eine gleichzeitige mehrfache Ausführung umfasst und wobei bei einer Ausführung des Computerprogramms (20) eine gleichzeitige mehrfache Ausführung verhindert wird.

4. Verfahren nach Anspruch 1, 2 oder 3, wobei das Computerprogramm (20) Programmcodeanweisungen (30) mit Mitteln (38) zur Authentifizierung eines Benutzers umfasst und mittels dieser vor dem Erstellen der Datensicherung (22) die Berechtigung des Benutzers zur Datensicherung geprüft wird.

5. Verfahren nach einem der vorangehenden Ansprüche, wobei die erstellte Datensicherung (22) an den aufrufenden Computer (26) übertragen wird.

6. Computerprogramm (20) mit Programmcodemitteln (30), die bei der Ausführung des Computerprogramms durch einen Virtualisierungsserver (10) diesen veranlassen, alle Schritte des Verfahrens nach jedem beliebigen der Ansprüche 1 bis 5 auszuführen.

7. Virtualisierungsserver (10) mit einer Verarbeitungseinheit und einem Speicher, in den ein Computerprogramm (20) nach Anspruch 6 geladen ist, das beim Betrieb des Virtualisierungsservers (10) aufgrund eines Aufrufs durch einen entfernten Computer (26) ausgeführt wird.

## Claims

1. Method for creating a data backup (22) of a virtualised automation solution (12) running on a virtualisation server (10),
wherein a computer program (20) with at least one program code instruction (30) with a specification (32) of the data and files to be included in the data backup (22) is executed on the virtualisation server (10) as a result of a call from a remote computer (26), and
the data backup (22) is created as part of the execution of the computer program (20),
wherein a hypervisor (16) is executed on the virtualisation server (10) and wherein the computer program (20) comprises program code instructions (30), **characterised in that** the program code instructions prompt the hypervisor (16) to write its configuration files to a boot medium of the hypervisor (16) captured by the data backup (22) before the creation of the data backup (22).

2. Method according to claim 1, wherein the specification (32) of the data to be included in the data backup contains the configuration of the hypervisor, as well as one or more software packages, such as one or more drivers and/or scripts for instance, preferably installed subsequently, i.e. after the installation of the hypervisor.

3. Method according to claim 1 or 2, wherein the computer program (20) comprises program code instructions (30) with means (36) for blocking a simultaneous multiple execution and wherein a simultaneous multiple execution is prevented during an execution of the computer program (20).

4. Method according to claim 1, 2 or 3, wherein the computer program (20) comprises program code instructions (30) with means (38) for authenticating a user and, by means of this, the authorisation of the user for the data backup is checked before creating the data backup (22).

5. Method according to one of the preceding claims, wherein the created data backup (22) is transferred to the calling computer (26).

6. Computer program (20) with program code means (30) which, when the computer program is run by a virtualisation server (10), prompt it to carry out all the steps of the method according to any one of claims 1 to 5.

7. Virtualisation server (10) with a processing unit and a memory into which is loaded a computer program (20) according to claim 6 which is executed during the operation of the virtualisation server (10) as a result of a call by a remote computer (26).

## Revendications

1. Procédé d'une création d'une sauvegarde (22) de données d'une solution (12) d'automatisation virtualisée se déroulant sur un serveur (10) de virtualisation,
dans lequel on effectue, sur le serveur (10) de virtualisation, sur la base d'un appel d'un ordinateur (26) à distance, un programme (20) informatique ayant au moins une instruction (30) de code de programme ayant une spécification (32) des données incluses dans la sauvegarde (22) de données et des fichiers, et on crée la sauvegarde (22) de données dans le cadre de l'exécution du programme (20) informatique,
dans lequel on réalise sur le serveur (10) de virtualisation, un hyperviseur (16), et dans lequel le programme (20) informatique comprend des instructions (30) de code de programme, **caractérisé en ce que** les instructions de code de programme font que l'hyperviseur (16) écrit, avant la création de la sauvegarde (22) de données, ses fichiers de configuration sur un support boot de l'hyperviseur (16) détecté par la sauvegarde (22) de données.

2. Procédé suivant la revendication 1, dans lequel la spécification (32) des données incluses dans la sauvegarde des données contient la configuration de l'hyperviseur ainsi que, de préférence, ultérieurement, c'est-à-dire après l'installation de l'hyperviseur, un ou plusieurs paquets de logiciel installés, comme par exemple, un ou plusieurs pilotes et/ou scripts.

3. Procédé suivant la revendication 1 ou 2, dans lequel le programme (20) informatique comprend des instructions (30) de code de programme ayant des moyens (36) de blocage d'une exécution multiple simultanée, et dans lequel, lors d'une exécution du programme (20) informatique, on empêche une exécution multiple simultanée.

4. Procédé suivant la revendication 1, 2 ou 3, dans lequel le programme (20) informatique comprend des instructions (30) de code de programme ayant des moyens (38) d'authentification d'un utilisateur et, au moyen de celle-ci, on contrôle, avant la création de la sauvegarde (22) de données, l'autorisation de l'utilisateur à effectuer la sauvegarde de données.

5. Procédé suivant l'une des revendications précédentes, dans lequel on transmet la sauvegarde (22) de données créée à l'ordinateur (26) appelant.

6. Programme (20) informatique ayant des moyens (30) de code de programme qui, lors de l'exécution du programme informatique par un serveur (10) de virtualisation, font que celui-ci exécute tous les stades du procédé suivant l'une quelconque des revendications 1 à 5.

7. Serveur (10) de virtualisation comprenant une unité de traitement et une mémoire, dans laquelle il est chargé un programme (20) informatique suivant la revendication 6, qui est exécuté lors du fonctionnent du serveur (10) de virtualisation, en raison d'un appel par un ordinateur (26) à distance.
